# EUROPÄISCHE PATENTSCHRIFT

(11) **EP 0 641 435 B1**
(45) Veröffentlichungstag und Bekanntmachung des Hinweises auf die Patenterteilung: **16.12.1998**
(21) Anmeldenummer: 94908256.4
(22) Anmeldetag: 19.02.1994
(51) Int. Cl.: G01N 27/419

(54) **VERFAHREN ZUR BESTIMMUNG VON GASKOMPONENTEN UND/ODER GASKONZENTRATIONEN VON GASGEMISCHEN**
METHOD OF IDENTIFYING GASES AND/OR DETERMINING GAS CONCENTRATIONS IN GAS MIXTURES
PROCEDE DE DETERMINATION DES COMPOSANTS GAZEUX ET/OU DE LEUR CONCENTRATION DANS DES MELANGES DE GAZ

(30) Priorität: 19.03.1993 DE 4308767
(43) Veröffentlichungstag der Anmeldung: 08.03.1995
(73) Patentinhaber: ROBERT BOSCH GMBH, 70442 Stuttgart (DE)
(72) Erfinder: HOETZEL, Gerhard, D-70376 Stuttgart (DE); NEUMANN, Harald, D-71665 Vaihingen (DE); RIEGEL, Johann, D-74321 Bietigheim-Bissingen (DE)
(86) Internationale Anmeldenummer: DE9400188
(87) Internationale Veröffentlichungsnummer: WO9422007

(56) Entgegenhaltungen:
- EP-A- 0 052 542
- EP-A- 0 517 366
- US-A- 4 272 331
- SENSORS AND ACTUATORS B, Bd.4, 1991, LAUSANNE CH Seiten 337 - 343 S.VAIHINGER ET AL 'Detection of halogenated and other hydrocarbons in air: Response functions of catalyst/electrochemical sensor systems' in der Anmeldung erwähnt
- SENSORS AND ACTUATORS B, Bd.9, 1992, LAUSANNE CH Seiten 233 - 239 J.H. VISSER ET AL 'Sensors for measuring combustibles in the absence of oxygen' in der Anmeldung erwähnt

## Beschreibung

### Stand der Technik

Die Erfindung geht aus von einem Verfahren zur Bestimmung von Gaskomponenten und/oder Gaskonzentrationen von Gasgemischen nach der Gattung des Hauptanspruchs.

Ein gattungsgemäßes Verfahren zur Bestimmung verschiedener Gaskomponenten eines Gasgemisches ist aus Sensors and Actuators, 20 (1989) 277 - 285 bekannt, bei dem in einer vor einem Gassensor angeordneten Reaktionskammer die Konzentration des Gasgemisches durch eine Temperaturänderung definiert moduliert wird. Das der Modulation folgende Sensorsignal wird analysiert und danach auf die entsprechende Gaskomponente geschlußfolgert. In Sensors and Actuators B, 4(1991) 337 - 343 wird dieses Verfahren weitergebildet, wobei durch ein plötzliches Schalten zwischen einem Referenzgas und dem Meßgas sprungartig die Gaskonzentration am Gassensor beeinflußt wird. Aus der Antwortfunktion des Sensorsignals wird dann auf die Gasspezies geschlossen. Bei beiden bekannten Verfahren erfolgt die Änderung der Konzentration des Gasgemisches in der Gasphase, wodurch das beeinflußte Gasgemisch nur über einen Diffusionsschritt zum sensitiven Bereich des Gassensors gelangt. Dadurch besitzt das System eine lange Ansprechzeit. Durch die stattfindende Gasdiffusion wird außerdem die Antwortfunktion verzerrrt. Schließlich schränkt die Gasdiffusion das mögliche Frequenzspektrum der Modulation ein.

Aus Sensors and Actuators B, 9 (1992), 183 - 189 und 233 - 239, ist ferner eine Sensoranordnung zur Bestimmung von CO-Konzentrationen bekannt, bei der eine elektrochemische Sauerstoff-Pumpzelle Sauerstoff zu einem Gassensor pumpt. Der Gassensor ist dabei im Meßraum ohne Bezug zur Pumpzelle und zum Gasgemisch angeordnet. Es wird lediglich gefordert, daß am Gassensor eine ausreichend Sauerstoff-konzentration vorliegt. Es wurde dabei festgestellt, daß bei CO in Luft mit 21% Sauerstoff der Widerstandswert eines SnO₂-Gassensors dreimal größer ist als bei CO in Stickstoff.

### Vorteile der Erfindung

Die Erfindung nutzt die Tatsache, daß die verschiedenen Gasspezies durch typische Adsorptions- und/oder Desorptionsgeschwindigkeiten an einem Gassensor charakterisierbar sind. Das erfindungsgemäße Verfahren mit den kennzeichnenden Merkmalen des Hauptanspruchs hat den Vorteil, daß mit einfachen Mitteln die Anwendung von Gassensoren mit einer Sauerstoffquerempfindlichkeit zur selektiven Bestimmung von Gaskomponenten, wie beispielsweise CO, NOₓ , HC möglich ist. Durch die Sauerstoffzufuhr wird die Gaskonzentration unmittelbar am Gassensor beeinflußt, wodurch sich eine schnelle Reaktion des Gassensors auf Konzentrationswechsel einstellt.

Durch die in den Unteransprüchen aufgeführten Maßnahmen sind vorteilhafte Weiterbildungen und Verbesserungen des im Hauptanspruch angegebenen Verfahrens möglich. Ein besonders realistisches Zeitverhalten der Antwortfunktion wird dadurch erreicht, wenn die Sauerstoffzufuhr zum Gassensor in Ionenform erfolgt. Infolgedessen kann ein Oberflächenplatzwechsel des Sauerstoffs am sensitiven Bereich des Gassensors wesentlich schneller stattfinden als durch Diffusion des Sauerstoffs über die Gasphase. Eine erste vorteilhafte Ausführungsform das Verfahrens besteht darin, das Übergangsverhalten des Sensorsignals durch eine von außen angeregte sprungartige Änderung der Gaskonzentration am Gassensor zu analysieren. Eine zweite vorteilhafte Ausführungsform besteht ferner darin, den zur Aufrechterhaltung einer konstanten Sauerstoff-Konzentration am Gassensor notwendigen Konzentrationsausgleich durch entsprechende Sauerstoffzufuhr regelungstechnisch auszuwerten.

### Zeichnung

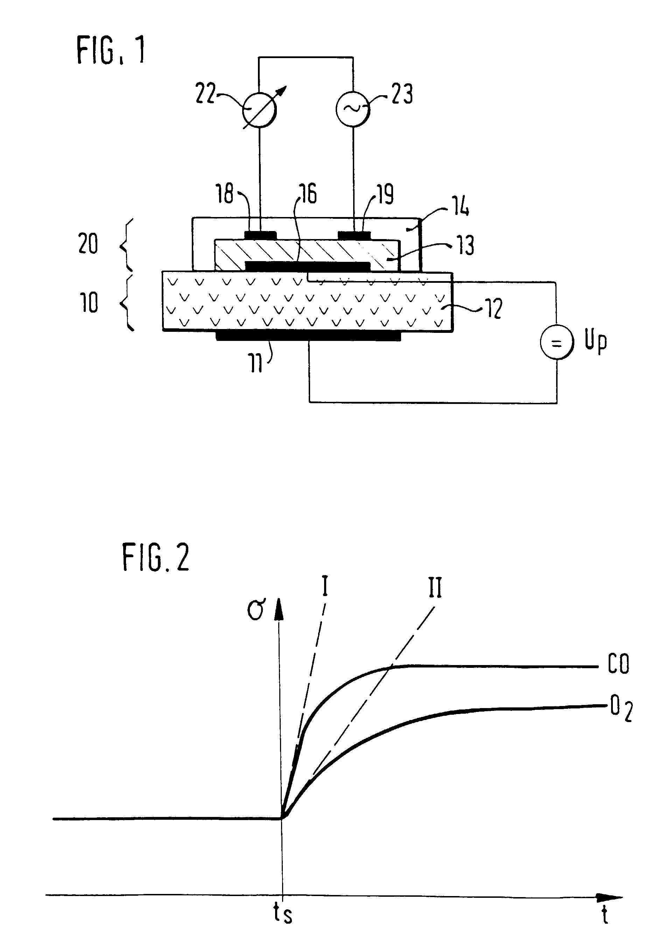

Zwei Ausführungsbeispiele der Erfindung sind in der nachfolgenden Beschreibung näher erläutert. Die Zeichnung zeigt in Figur 1 den Verlauf der Leitfähigkeit σ eines SnO₂-Halbleitergassensors über der Zeit t und Figur 2 einen Querschnitt einer Prinzipdarstellung einer Ausführungsform eines Sensorssystems zur Durchführung des erfindungsgemäßen Verfahrens.

### Ausführungsbeispiel

Das in Figur 1 dargestellte Sensorsystem besitzt einen integrierten Aufbau, bestehend aus einer elektrochemischen Sauerstoff-Pumpzelle 10 und einem Halbleitergassensor 20. Auf einem plättchen- oder folienförmigen Festelektrolytträger 12 aus einem O₂-ionenleitenden Festelektrolyt, beispielsweise aus stabilisiertem Zirkonoxid, ist auf der einen Großfläche des Festelektrolytträgers 12 eine äußere Pumpelektrode 11 und auf der gegenüberliegenden Großfläche eine innere Pumpelektrode 16 angeordnet. Die beiden Pumpelektroden 11, 16 bestehen beispielsweise aus Platin oder Platin-Cermet.

Der Halbleitergassensor 20 besitzt eine erste und eine zweite Meßelektrode 18 und 19 und eine poröse halbleitende Metalloxidschicht 13. Im vorliegenden Ausführungsbeispiel wird als halbleitende Metalloxidschicht SnO₂ verwendet. Zur Ausbildung des sensitiven Bereichs ist über die innere Pumpelektrode 16 die Metalloxidschicht 13 gelegt. Die Meßelektroden 18, 19 sind der inneren Pumpelektrode 16 gegenüberliegend in einem Abstand zueinander auf der SnO₂-Schicht 13 nebeneinander angeordnet. Die Meßelektroden 18, 19 und die Metalloxidschicht 13 sind mit einer porösen Schutzschicht 14 abgedeckt. Die poröse Schutzschicht 14 kann auch um das gesamte Schichtsystem gelegt sein. Außerdem ist das Sensorsystem mit einem nicht dargestellten, in das Schichtsystem integrierten Heizer ausgeführt.

Durch Anlegen einer Gleichspannung Up an die Pumpelektroden 11 und 16 wird Sauerstoff von der äußeren Pumpelektrode 11 zur inneren Pumpelektrode 16 gepumpt. Der zu pumpende Sauerstoff kann dabei entweder einem sich an der äußeren Pumpelektrode 11 der Pumpzelle 10 befindlichen Referenzgas entnommen werden, oder der Sensor taucht insgesamt in ein Meßgas ein, um molekularen Sauerstoff oder Sauerstoff aus sauerstoffhaltigen Verbindungen aus dem Gasgemisch über die äußere Pumpelektrode 11 abzupumpen. Die Meßelektroden 18, 19 des Halbleitergassensors 20 sind mit einer Meßspannungsquelle 23 und einem Amperemeter 22 verbunden. Ferner ist eine nicht dargestellte Regelungsschaltung vorgesehen, die mit den Pumpelektroden 11, 16 und den Meßelektroden 18, 19 gekoppelt ist.

Bei einem ersten Ausführungsbeispiel wird mittels des Amperemeters 22 die Leitfähigkeit σ des Gassensors 20 gemessen und mittels der Regelungsschaltung durch eine entsprechende Einstellung der Pumpspannung Up die Leitfähigkeit des Gassensors 20 auf einen konstanten Wert geregelt (Figur 2). Wie aus Figur 2 ferner hervorgeht, wird zu einem Zeitpunkt ts der Pumpstrom abgeschaltet, wodurch die Partialdrücke im Gasgemisch relativ zu den Partialdruck am sensitiven Bereich des Gassensors 20 ansteigen. In Figur 2 wird dieser Anstieg einmal durch die gestrichelte Linie I für ΔpO₂ + ΔpCO und für die gestrichelte Linie II für Δ pO₂ dargestellt. Die Linie I stellt somit die Antwortfunktion für ein Gasgemisch mit CO dar, und die Linie II die Antwortfunktion für ein Gasgemisch dar, welches ausschließlich O₂ enthält. Die Antwortfunktionen werden einer rechentechnischen Anlage zugeführt, welche das Zeitverhalten analysiert und die Antwortfunktion mit in einem Speicher abgelegten Standardübergangsfunktionen einzelner Gaskomponenten und Gasgemische vergleicht. Aufgrund der unterschiedlichen dynamischen Verhalten der verschiedenen Gaskomponenten und Gasgemische infolge der typischen Adsorptions- und/oder Desorptionsgeschwindigkeiten der Gasspezies ergeben sich unterschiedliche Übergangsfunktionen, so daß anhand dieser auf die Gaskomponenten geschlossen werden kann. Mit zunehmender Zeit t wird der Sauerstoffüberschuß des sensitiven Bereichs durch die reduzierende Wirkung der anderen Gaskomponenten und die Desorption überschüssigen Sauerstoffs an der Sensoroberfläche abgebaut, so daß sich allmählich eine konstante Leitfähigkeit einstellt. Dieser Leitfähigkeitswert gibt schließlich Auskunft über die Gaskonzentration der Gaskomponenten und/oder des Gasgemischs.

Eine zweites Ausführungsform des erfindungsgemäßen Verfahrens ist dadurch möglich, daß die Leitfähigkeit des Gassensors 20 wird. Dazu wird der Pumpstrom und/oder die Pumpspannung entsprechend moduliert. Mit an sich bekannnten Mitteln der Signalanalyse wird über eine Frequenzganganalyse das Zeitverhalten der Modulation ermittelt. Dazu wird beispielsweise ein phasenselektiver Gleichrichter verwendet. Die Pasenverschiebung zwischen Pumpstrom und Sensorsignal wird mit gespeicherten Standardwerten für einzelne Gaskomponenten und Gasgemische verglichen. Anhand des Vergleich wird, wie im ersten Ausführungsbeispiel, auf die Gaskomponenten geschlossen. Die Amplitude der Modulationsfrequenz gibt schließlich Auskunft über die Konzentration der Gaskomponenten und/oder des Gasgemisches.

Der beschriebene Sensor mit integriertem Aufbau nutzt den direkten Sauerstofftransfer über den Spillover-Effekt von der inneren Pumpelektrode 16 zur Metalloxidschicht 13. Infolge dieser heterogenen Katalyse durch das Platin der Elektrode 16 findet ein Oberflächenplatzwechel wesentlich schneller statt als bei einer Diffusion des Sauerstoffs über die Gasphase. Bei einer Diffusion über die Gasphase ist zudem zusätzlich ein Desorptionschritt des Sauerstoffs von der Oberfläche der Pumpelektrode sowie ein Adsorptionsschritt des Sauerstoffs an der Oberfläche der Metalloxidschicht 13 notwendig.

Es ist auch durchaus denkbar, das erfindungsgemäße Verfahren auch mit Sensoren zu realisieren, bei denen zwischen der inneren Pumpelektrode und dem sensitiven Bereich eine poröse Diffusionsschicht oder ein Diffusionskanal vorgesehen ist. Bei einem derartigen Sensor ist jedoch mit einer höheren Ansprechzeit aufgrund des Übergangs des Sauerstoffs in die Gasphase zu rechnen.

## Patentansprüche

1. Verfahren zur Bestimmung von Gaskomponenten und/oder Gaskonzentrationen von Gasgemischen, insbesondere in Abgasen von Verbrennungsmotoren, bei dem die durch eine Gaskonzentrationsänderung an einem Gassensor hervorgerufene Adsorptions- und/oder Desorptionsgeschwindigkeiten des Gasgemisches ausgewertet werden, dadurch gekennzeichnet, daß die Gaskonzentrationsänderung über eine variierbare Zufuhr von Sauerstoff zum Gassensor ermittelt wird, wobei der Sauerstoff mittels einer Katalyse umgesetzt und in Ionenform zum Gassensor transportiert wird, daß das Zeitverhalten der Antwortfunktion auf die Gaskonzentrationsänderung erfaßt wird, und daß anhand eines Vergleichs mit standardisierten Zeitverhalten die Gaskomponenten ermittelt werden.

2. Verfahren nach Anspruch 1, dadurch gekennzeichnet, daß die Sauerstoffzufuhr zum Gassensor mit einer elektrochemischen Sauerstoff-Pumpzelle erfolgt.

3. Verfahren nach Anspruch 1 oder 2, dadurch gekennzeichnet, daß die Gaskcnzentration des dem Gassensor zugeführten Gasgemisches sprungartig geändert wird, und daß aus dem Übergangsverhalten der Antwortfunktion des Sensorsignals des Gassensors die Gaskomponenten ermittelt werden.

4. Verfahren nach Anspruch 3, dadurch gekennzeichnet, daß die sprungartige Änderung der Konzentration durch Abschalten der Sauerstoffzufuhr erzeugt wird.

5. Verfahren nach Anspruch 3, dadurch gekennzeichnet, daß die sich nach dem Übergangsverhalten einstellende Amplitude der Antwortfunktion des Sensorsignals als Maß für die Schadstoffkonzentration verwendet wird.

6. Verfahren nach Anspruch 1 oder 2, dadurch gekennzeichnet, daß durch eine Modulation der Sauerstoffzufuhr das Sensorsignal des Gassensor moduliert wird, und daß anhand des Antwort-Zeitverhaltens auf die Modulationsfrequenz der Sauerstoffzufuhr die Gaskomponenten ermittelt werden.

7. Verfahren nach Anspruch 6, dadurch gekennzeichnet, daß zur Modulation des Sensorsignal eine elektrochemische Sauerstoff-Pumpzelle verwendet wird, deren Pumpstrom und /oder Pumpspannung moduliert wird.

8. Verfahren nach Anspruch 6 oder 7, dadurch gekennzeichnet, daß die Amplitude der Modulationsfrequenz als Maß für die Gaskonzentration verwendet wird.

9. Verfahren nach einem der vorhergehenden Ansprüche, dadurch gekennzeichnet, daß während der Regelung auf konstante Leitfähigkeit des Sensorsignals ein Sauerstoffüberschuß am Gassensor eingestellt wird.

10. Verfahren nach einem der vorhergehenden Ansprüche, dadurch gekennzeichnet, daß als Gassensor ein Halbleitergassensor, vorzugsweise ein SnO₂-Gassensor eingesetzt wird.

## Claims

1. Method for the determination of gas components and/or gas concentrations of gas mixtures, in particular in exhaust gases of internal-combustion engines, in which the adsorption and/or desorption rates of the gas mixture, caused by a change in gas concentration at a gas sensor, are evaluated, characterized in that the change in gas concentration is determined through a variable supply of oxygen to the gas sensor, the oxygen being converted by means of catalysis and transported to the gas sensor in ion form, in that the time profile of the response function to the change in gas concentration is recorded, and in that the gas components are determined using a comparison with standardized time profiles.

2. Method according to Claim 1, characterized in that the oxygen is supplied to the gas sensor using an electrochemical oxygen pump cell.

3. Method according to Claim 1 or 2, characterized in that the gas concentration of the gas mixture supplied to the gas sensor is varied discontinuously, and in that the gas components are determined by the transient behaviour of the response function of the sensor signal of the gas sensor.

4. Method according to Claim 3, characterized in that the discontinuous variation in the concentration is produced by turning off the oxygen supply.

5. Method according to Claim 3, characterized in that the amplitude of the response function of the sensor signal, set up after the transient behaviour, is used as a measure of the pollutant concentration.

6. Method according to Claim 1 or 2, characterized in that the sensor signal of the gas sensor is modulated through a modulation of the oxygen supply, and in that the gas components are determined using the time profile of the response to the modulation frequency of the oxygen supply.

7. Method according to Claim 6, characterized in that, in order to modulate the sensor signal, use is made of an electrochemical oxygen pump cell whose pump current and/or pump voltage are modulated.

8. Method according to Claim 6 or 7, characterized in that the amplitude of the modulation frequency is used as a measure of the gas concentration.

9. Method according to one of the preceding claims, characterized in that oxygen excess is set up at the gas sensor during the setting of the sensor signal to constant conductivity.

10. Method according to one of the preceding claims, characterized in that a semiconductor gas sensor, preferably an SnO₂ gas sensor, is used as the gas sensor.

## Revendications

1. Procédé pour déterminer les composantes de gaz et/ou les concentrations de gaz dans des mélanges gazeux notamment dans des gaz d'échappement de moteurs à combustion interne selon lesquels, les vitesses d'adsorption et/ou de désorption provoquées par une variation de la concentration de gaz au niveau d'un capteur de gaz sont exploitées dans le mélange de gaz,
caractérisé en ce que
la variation de concentration de gaz est déterminée par une alimentation variable d'oxygène vers le capteur de gaz et l'oxygène est converti par catalyse et est transporté sous forme ionique vers le capteur de gaz et le comportement dans le temps de la fonction de réponse à la variation de concentration de gaz est détecté pour permettre de déterminer par comparaison avec un comportement dans le temps, normalisé, les composants du gaz.

2. Procédé selon la revendication 1,
caractérisé en ce que
l'alimentation en oxygène vers le capteur de gaz se fait par une cellule de pompage d'oxygène, électrochimique.

3. Procédé selon la revendication 1 ou 2,
caractérisé en ce que
la concentration de gaz du mélange gazeux fourni au capteur de gaz varie brusquement et à partir du comportement transitoire de la fonction de réponse du signal fourni par le capteur de gaz, on détermine les composantes du gaz.

4. Procédé selon la revendication 3,
caractérisé en ce qu'
on génère la variation brusque de la concentration en coupant l'alimentation en oxygène.

5. Procédé selon la revendication 3,
caractérisé en ce que
l'amplitude de la fonction de réponse du signal de capteur qui s'établit selon le comportement transitoire est utilisée comme mesure de la concentration en matière polluante.

6. Procédé selon l'une des revendications 1 ou 2,
caractérisé en ce que
par une modulation de l'alimentation en oxygène on module le signal du capteur de gaz et à l'aide du comportement dans le temps de la réponse en fonction de la fréquence de modulation de l'alimentation en oxygène, on détermine les composantes du gaz.

7. Procédé selon la revendication 6,
caractérisé en ce que
pour moduler le signal de capteur, on utilise une cellule de pompage d'oxygène électrochimique dont on module l'intensité et/ou la tension de pompage.

8. Procédé selon les revendications 6 ou 7,
caractérisé en ce qu'
on utilise l'amplitude de la fréquence de modulation comme mesure de la concentration de gaz.

9. Procédé selon l'une des revendications précédentes,
caractérisé en ce que
pendant la régulation sur une conductivité constante du signal de capteur, on règle un excédent d'oxygène au niveau du capteur de gaz.

10. Procédé selon l'une des revendications précédentes,
caractérisé en ce que
comme capteur de gaz, on utilise un capteur de gaz à semiconducteur de préférence un capteur de gaz SnO₂.
